## Europäisches Patentamt

## European Patent Office

## Office européen des brevets

(19)

(11) Numéro de publication: **0 241 344**
**B1**

(12) **FASCICULE DE BREVET EUROPEEN**

(45) Date de publication du fascicule du brevet:
08.02.89

(21) Numéro de dépôt: 87400648.9

(22) Date de dépôt: 24.03.87

(51) Int. Cl.⁴: **E04B 2/76**, E04B 2/74, E04H 1/12, F16B 12/32

(54) Dispositif d'assemblage d'ossature de stand pour exposition temporaire.

(30) Priorité: 11.04.86 FR 8605202
24.06.86 FR 8609090

(43) Date de publication de la demande:
14.10.87 Bulletin 87/42

(45) Mention de la délivrance du brevet:
08.02.89 Bulletin 89/6

(84) Etats contractants désignés:
AT BE CH DE ES GB GR IT LI LU NL SE

(56) Documents cités:
DE-A- 2 624 273
DE-A- 3 102 211
FR-A- 2 255 491
FR-A- 2 508 524
US-A- 3 261 625

(73) Titulaire: Chenel, Guy Gilbert, 70, rue Jean Bleuzen, Vanves (Hauts de Seine)(FR)

(72) Inventeur: Chenel, Guy Gilbert, 70, rue Jean Bleuzen, Vanves (Hauts de Seine)(FR)

(74) Mandataire: Cabinet Pierre HERRBURGER, 115, Boulevard Haussmann, F-75008 Paris(FR)

**Description**

L'invention concerne un dispositif d'assemblage d'ossature de stand pour exposition temporaire.

Du document FR-A 2 508 524 on connait un stand d'exposition temporaire, qui se compose de profilés horizontaux bas et hauts fixés par leurs extrémités à des profilés verticaux formant des montants. D'autres profilés verticaux de longueur plus importante formant des hampes et juxtaposés aux montants, peuvent être prévus pour supporter divers éléments tels que des panneaux publicitaires, des spots d'éclairage, etc. Ces montants et/ou les hampes sont maintenus sur le sol par des embases ou par tout autre moyen. Les traverses horizontales sont pourvues de rainures longitudinales destinées à recevoir et à maintenir des cadres à l'intérieur desquels sont fixés les panneaux formant la cloison proprement dite. Afin de permettre la mise en place des cadres et de leurs panneaux, la traverse inférieure et la traverse supérieure comportent une rainure longitudinale, la rainure du profilé supérieur étant cependant plus profonde que la rainure du profilé inférieur, afin de pouvoir introduire, tout d'abord, le bord supérieur du cadre dans la rainure de la traverse supérieure, puis de rabattre le cadre dans le plan de la cloison en disposant le côté inférieur dans la rainure de la traverse inférieure dans laquelle elle est maintenue par son propre poids.

Les traverses horizontales doivent par ailleurs bien souvent être reliées en un point intermédiaire de leur longueur à d'autres traverses horizontales, afin de constituer par exemple des cabines d'essayage 6, des penderies $6_1$ ou tout autre élément d'installation de stand qu'il apparaîtrait souhaitable de fixer à l'ossature.

Il est cependant apparu que ces stands d'exposition posent divers problèmes concernant notamment leurs montage et démontage qui doivent être rapides, concernant leur assemblage qui doit être solide, ces moyens d'assemblage devant en outre être conçus de manière à pourvoir être réutilisés un grand nombre de fois sans subir de détérioration.

Ces problèmes ne peuvent pas être résolus avec les moyens d'assemblage d'ossature de stand connus actuellement qui mettent en œuvre des vis ou des boulons entraînant un temps de montage et de démontage trop long et qui ne permettent pas un assemblage suffisamment robuste, rigide et précis des divers montants et de leurs traverses.

La présente invention a notamment pour but de remédier à ces inconvénients et de définir un dispositif d'assemblage des traverses sur leurs montants, qui permet de placer la traverse supérieure à deux niveaux, un niveau haut permettant la mise en place des cadres 4 dans les rainures, et un niveau bas pour lequel la rainure de la traverse horizontale supérieure est emboîtée plus profondément dans le bord supérieur du cadre afin d'assurer son verrouillage.

L'invention est, à cet effet, caractérisée en ce que les montants comportent à leurs extrémités supérieures des fentes longitudinales situées dans le fond des rainures en queue d'aronde, ces fentes débouchant à l'extrémité supérieure des montants qui est adjacente de l'extrémité de la traverse haute à assembler et en ce qu'un noyau est disposé dans ces fentes, ce noyau présentant au moins un talon se disposant transversalement dans une rainure en queue d'aronde, au moins une bille maintenue dans un orifice du noyau de façon à faire saillie dans la rainure en queue d'aronde au-dessus de ce talon et un doigt coulissant dans le noyau à l'encontre d'un ressort, ce doigt étant pourvu d'une encoche et étant susceptible de prendre deux positions pour l'une desquelles l'encoche du doigt est située à hauteur de la bille et permet son dégagement de la rainure pour le passage du pêne, tandis que pour l'autre position, le doigt verrouille la bille en saillie dans la rainure et maintient le pêne soit dans une position haute, au-dessus de la bille, soit dans une position basse entre le talon et la bille.

Suivant une autre caractéristique de l'invention, les traverses hautes et basses sont identiques et comportent deux rainures longitudinales opposées de profondeur différente.

Suivant une autre caractéristique de l'invention, les traverses comportent à leurs extrémités, d'une part un pêne, d'autre part un verrou élastique, ce pêne et ce verrou étant disposés dans le plan des deux rainures de profondeur différente.

Suivant une autre caractéristique de l'invention, les traverses présentent deux rainures longitudinales, opposées, en queue d'aronde, orientées perpendiculairement aux rainures opposées de profondeur différente, une rainure longitudinale de faible profondeur étant prévue en position adjacente de ces rainures en queue d'aronde, de manière à coopérer avec le verrou élastique d'une autre traverse dont le pêne est logé dans la rainure en queue d'aronde voisine.

L'invention est représentée à titre d'exemple non limitatif sur les dessins ci-joints dans lesquels:

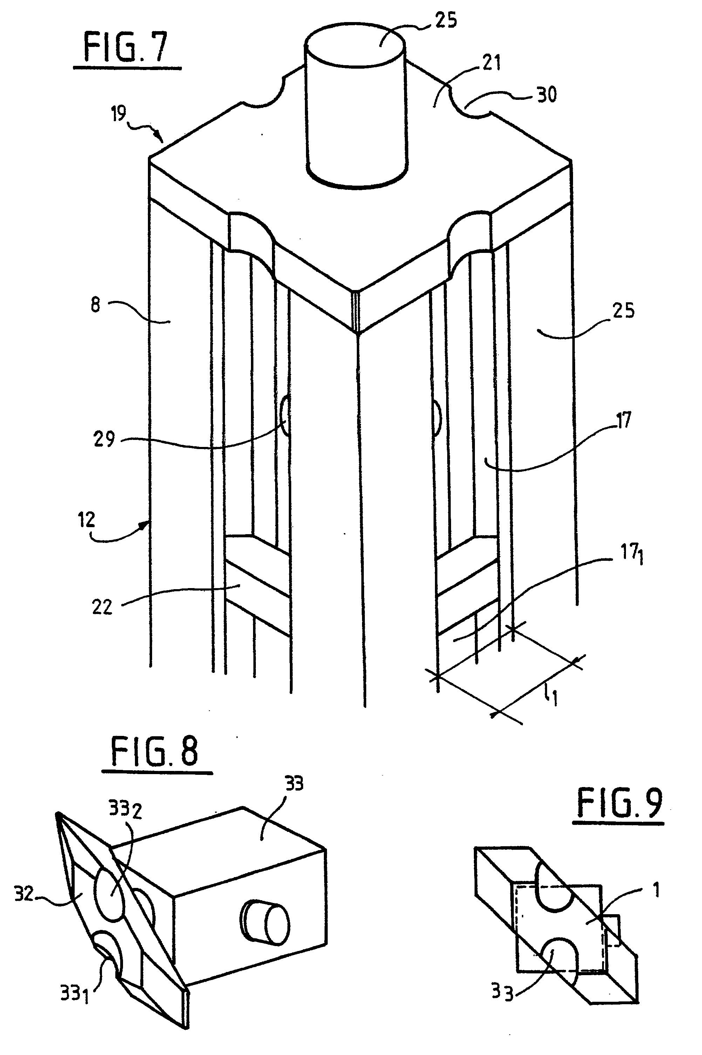

- la figure 1 est une vue en perspective d'un type de stand connu;
- la figure 2 est une vue en coupe transversale de l'assemblage de deux traverses sur l'extrémité supérieure d'un poteau, l'une des traverses étant représentée en position basse, l'autre étant représentée en position haute;
- la figure 3 est une vue en perspective de l'extrémité supérieure d'un montant;
- la figure 4 est une vue en perspective de l'extrémité d'une traverse;
- la figure 5 est une vue en perspective d'un mode de réalisation du pêne d'assemblage;
- la figure 6 est une vue en perspective du noyau du dispositif d'assemblage et de son bouton de commande;
- la figure 7 représente, en perspective, l'extrémité supérieure d'un montant pourvu du dispositif d'assemblage;
- la figure 8 est une vue en perspective d'un autre mode de réalisation du pêne de verrouillage;
- la figure 9 est une vue de face du pêne d'assemblage de la figure 8;
- les figures 10 et 11 représentent, en perspective schématique, deux modes de mise en œuvre du

pêne des figures 8 et 9 pour l'assemblage de traverses à des montants ou à d'autres traverses;

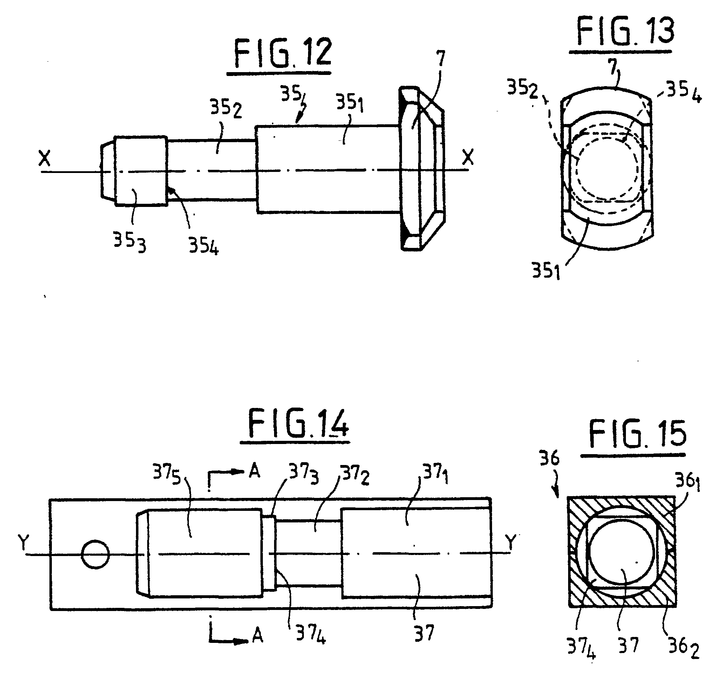

– la figure 12 est une vue latérale d'un autre mode de réalisation du pêne;

– la figure 13 est une vue de droite de la figure 12;

– la figure 14 est une vue en élévation de l'une des parties de l'embase recevant le pêne de la figure 12;

– la figure 15 est une vue en coupe transversale suivant A–A des deux parties assemblées de l'embase de la figure 14;

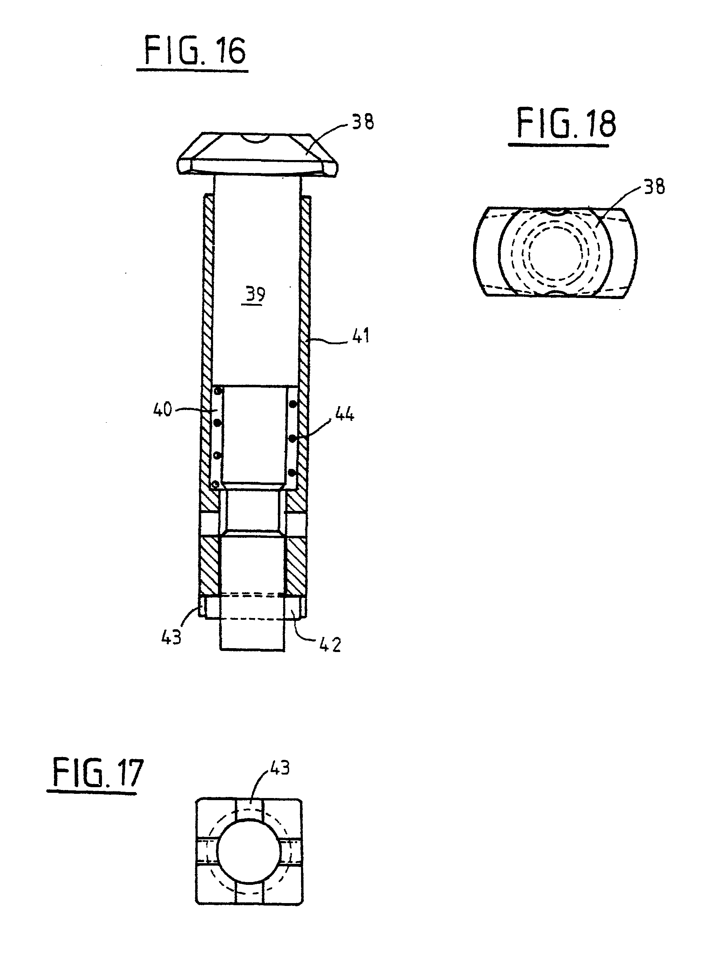

– la figure 16 est une vue en coupe axiale d'un autre mode de réalisation du dispositif d'assemblage;

– la figure 17 est une vue de dessous de l'embase de la figure 16;

– la figure 18 est une vue de dessus du pêne de la figure 16.

La présente invention a, en conséquence, pour but d'assurer un montage rapide et solide de la traverse basse $1_1$ et de la traverse haute $1_2$ sur les poteaux 2, ce montage étant en outre tel que la traverse haute $1_2$ puisse être placée dans une position haute pendant la mise en place des cadres 4 puis en position basse lorsque les cadres d'une cloison sont mis en place, cette position basse permettant de verrouilles les cadres dans le fond des rainures des traverses supérieures et inférieures en assurant le contreventement longitudinal de la cloison, suivant son plan, du fait de la mise en œuvre de cadres rectangulaires rigides.

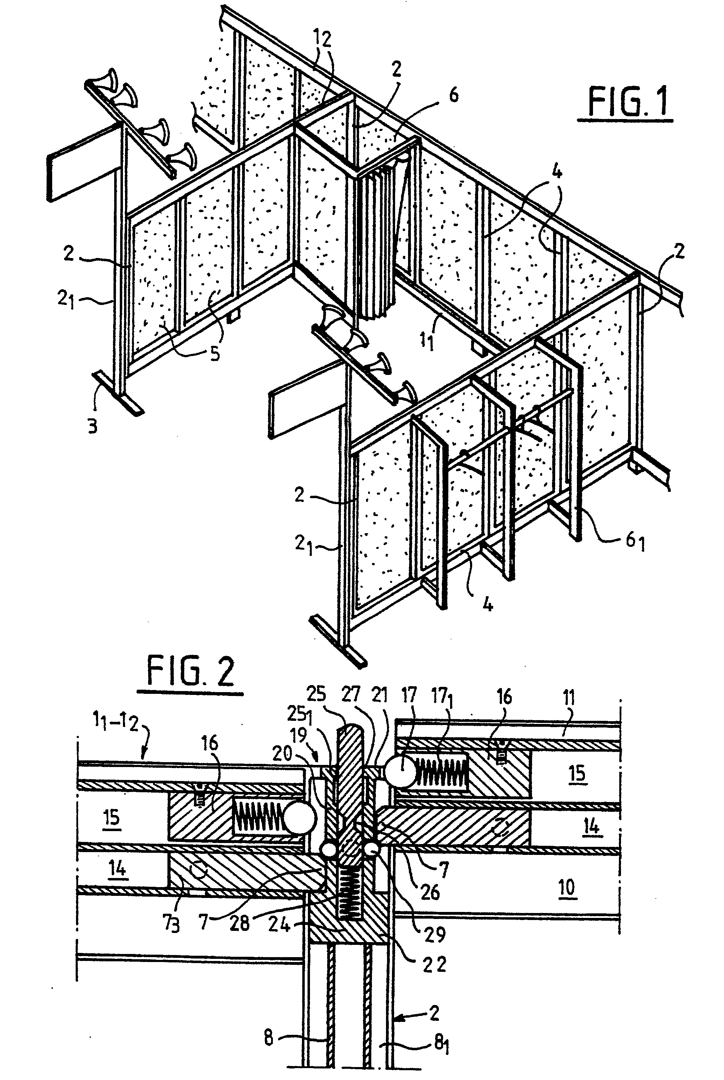

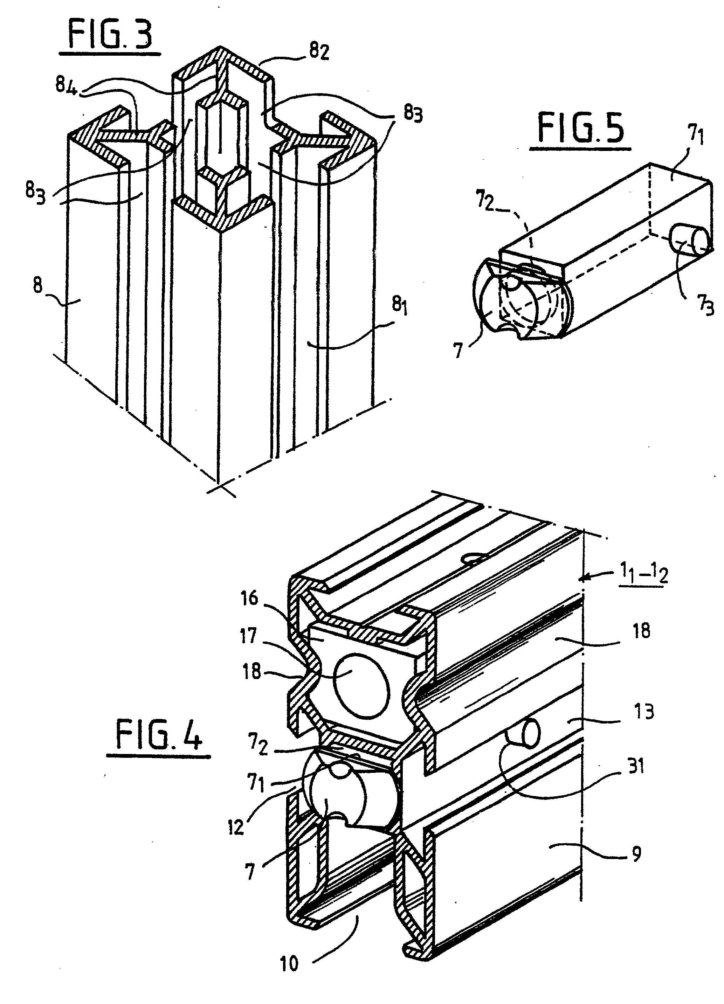

Le verrouillage des traverses sur les poteaux est assuré par un pêne 7 qui est fixé aux extrémités des traverses $1_1$–$1_2$ (voir figures 2 et 4) et qui vient se loger dans l'une des rainures longitudinales en queue d'aronde $8_1$ d'un profilé de section carrée 8 (voir figures 2 et 3) qui constitue le montant 2.

La longueur du pêne 7 et sa forme correspondent à celles de la rainure en queue d'aronde $8_1$, ce pêne 7 étant relié à son embase $7_1$ par une tige cylindrique $7_2$ dont le diamètre correspond sensiblement à la largeur du pêne 7 et à la largeur de l'ouverture de la rainure en queue d'aronde $8_1$.

L'embase de section carrée 7 est logée dans un canal longitudinal de section correspondante formé dans le profilé 9 qui constitue les traverses $1_1$ et $1_2$ (figure 4).

Ce profilé 9 de section générale rectangulaire, présente sur deux de ses côtés opposés des rainures 10, 11 de profondeur différente, de manière que la rainure 11, la moins profonde, soit destinée à recevoir le côté bas d'un cadre 4 alors que la rainure 10, la plus profonde, est destinée à recevoir le côté supérieur de ce cadre. Deux autres rainures en queue d'aronde 12 et 13 sont prévues sur les deux autres côtés opposés du profilé et sont donc perpendiculaires aux rainures 10 et 11, ces rainures étant également destinées à recevoir des pênes d'assemblage, comme on le verra ci-après, lorsque l'on désire assembler une traverse à une autre traverse.

La partie centrale du profilé est occupée par deux canaux longitudinaux 14 et 15 qui sont disposés l'un au-dessus de l'autre dans le plan des rainures 10 et 11, le canal 14 de section carrée recevant l'embase $7_1$ du pêne 7, tandis que le canal 15 reçoit un plot 16 constituant un verrou à ressort et comportant à cet effet un logement dans lequel est disposée une bille 17 ou similaire, poussée par un ressort $17_1$.

Les deux faces du profilé 9 comportant les rainures en queue d'aronde 12 et 13, sont également pourvues d'une rainure longitudinale 18 dont l'écartement par rapport aux rainures 12 et 13 correspond à la distance de la bille 17 par rapport au pêne 7, afin de constituer un moyen de verrouillage de la position angulaire d'une traverse que l'on assemble en un point intermédiaire de la longueur d'une autre traverse.

Le profilé 8 constituant les montants 2 comporte également un canal central $8_2$ à l'intérieur duquel vient se loger le noyau 19 du dispositif d'assemblage.

A cet effet, l'extrémité supérieure du profilé 8 est pourvue de fentes $8_3$ qui débouchent dans le fond des rainures en queue d'aronde $8_1$ et dont la longueur correspond à la longueur du noyau 19.

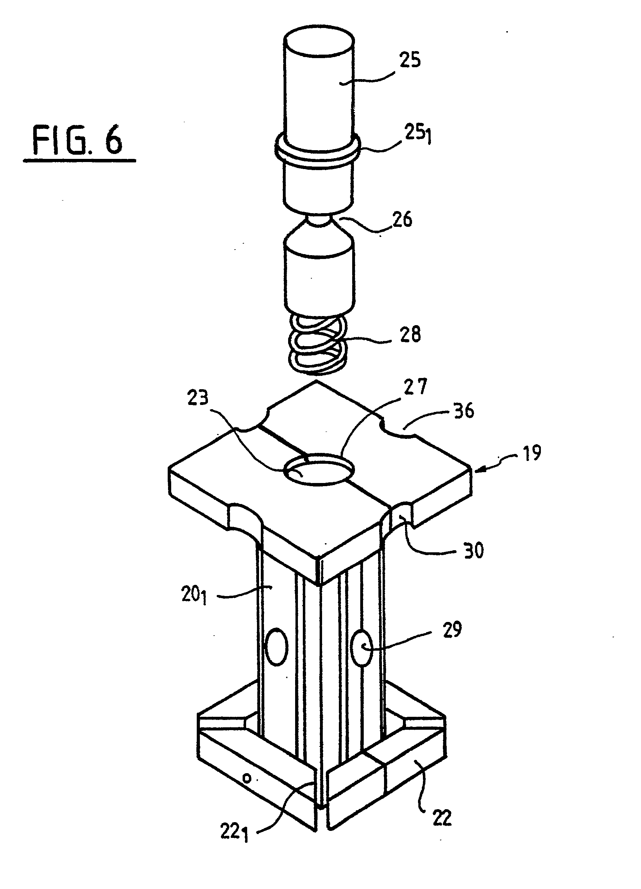

Le noyau 19 du dispositif d'assemblage comporte un fût de section carrée 20 (voir figure 6), dont la section correspond à celle du canal central $8_2$ du profilé 8. Ce fût est délimité à ses extrémités par deux flasques 21 et 22 dont l'un, 21, est destiné à venir s'appuyer sur l'extrémité supérieure du profilé 8 et présente des dimensions correspondant à la section de ce profilé alors que l'autre, 22, présente dans ses angles des fentes $22_1$ en Y correspondant aux cloisons en Y $8_4$ reliant les angles du canal $8_2$ deux angles de la périphérie du profilé (voir figure 3).

Le fût 20 du noyau 19 est pourvu d'un orifice central 23 obturé en 24 à son extrémité inférieure (voir figure 2). Ce canal reçoit un doigt de commande de section correspondante 25 qui est pourvu d'une rainure annulaire 26.

Ce doigt 25 comporte une collerette $25_1$ qui vient en appui sur un rebord interne 27 du bord de l'orifice central 23 afin que ce doigt 25 soit maintenu à coulissement axial, à l'encontre d'un ressort 28, dans l'orifice 23.

Le fût 20 qui présente des nervures longitdunales $20_1$ s'adaptent dans les fentes $8_3$ des profilés 8, comporte également des perçages transversaux $20_1$ qui débouchent dans le fond des rainures en queue d'aronde $8_1$. dans ces perçages sont retenues des billes 29, qui, en position de repos, viennent s'appuyer sur la périphérie du doigt 25 de façon à faire saillie à l'intérieur des rainures en queue d'aronde $8_1$. Par contre, lorsque le doigt 25 est enfoncé, la rainure 26 vient à hauteur des billes 29, ce qui permet leur recul à l'intérieur du noyau afin de permettre le passage du pêne 7.

Le fonctionnement de ce dispositif d'assemblage est le suivant. Les pênes 7 disposés aux extrémités des traverses (profilés 9) étant d'une largeur inférieure à la largeur de l'ouverture des rainures en queue d'aronde $8_1$, les pênes 9 de ces profilés peuvent être introduits longitudinalement dans les rainures $8_1$ afin d'être ensuite pivotés de 90° pour qu'ils se placent transversalement aux rainures $8_1$ comme cela est représenté sur la partie droite de la figure 2. Dans cette position, le pêne 7 est situé au-dessus d'une bille 29 et la bille 17, du verrou élastique 16, se loge dans une encoche 30 de la périphérie du flasque supérieur 21. Le profilé 9 constituant une traverse supérieure $1_2$ est ainsi immobilisé dans un plan vertical en position haute, du fait de l'appui du pêne sur une bille 29 et du fait du logement de la bille 17 dans une encoche 30.

Dans cette position haute de la traverse supérieure, les cadres 4 peuvent donc aisément être mis en place en introduisant tout d'abord leur côté supérieur dans la rainure la plus profonde 10 d'un profilé haut $1_2$ puis, après pivotement, en introduisant le côté inférieur des cadres 4 dans la rainure la moins profonde 11 d'un profilé bas $1_1$.

Lorsque tous les cadres 4 d'une même cloison sont ainsi mis en place, il suffit à l'opérateur d'appuyer sur le doigt 25 des montants 2 jusqu'à ce que la rainure annulaire 26 vienne se placer à hauteur des billes 29, ce qui a pour effet de permettre le recul de ces billes et de permettre la descente de la traverse supérieure dans sa position basse (représentée sur le côté gauche de la figure 2).

Dans cette position, le pêne 7 vient en appui sur le flasque inférieur 22, tandis qu'il est verrouillé dans cette position par la bille 29 qui est revenue en saillie dans la rainure en queue d'aronde $8_1$ du fait du retour en position haute du doigt 25 sous l'action du ressort 28.

Dans cette position, la bille 17 du verrou élastique 16 est logée dans l'ouverture de la rainure en queue d'aronde $8_1$ du montant 2, afin de coopérer au verrouillage de ces traverses horizontales de manière que leur plan soit vertical.

Dans l'exemple de réalisation des figures 2, 4 et 5, l'embase $7_1$ de section carrée du pêne 7 est maintenue dans le canal de section correspondante 14 d'un profilé 9 par un doigt de verrouillage $7_3$ poussé par un ressort (non représenté) et qui vient se loger dans un orifice de section correspondante 31 (figure 4).

Un orifice de section correspondante sera cependant prévu dans le fond des trois rainures 12, 13 et 10 afin que le pêne 7 puisse être tourné de 90° de façon que sa longueur soit orientée, soit longitudinalement, soit transversalement par rapport à la traverse 9.

La disposition transversale du pêne 7 aux extrémités des profilés 9 est utilisée pour permettre l'assemblage des traverses aux montants, comme cela est représenté sur la figure 2, alors que la disposition longitudinale des pênes 7 aux extrémités des profilés 9 est utilisée pour l'assemblage de deux traverses l'une à l'autre en logeant ces pênes 7 dans les rainures 12 ou 13 de façon que les billes de verrouillage 17 se logent dans les rainures 18. Ainsi, cet assemblage permet également d'assembler deux traverses horizontales l'une à l'autre, le plan de ces traverses étant maintenu verticalement.

Dans l'exemple de réalisation des figures 8 et 9, on a représenté un autre mode de réalisation du pêne qui peut être utilisé quel que soit le genre d'assemblage, de traverse à montant, ou de traverse à traverse, sans nécessiter de pivotement à 90° du pêne aux extrémités des traverses.

Dans ce cas, le pêne 32 est orienté à 45° (en diagonale) par rapport à son embase de section carrée 33 (voir figure 8 et 9), ce pêne présentant une forme et des dimensions adaptées pour s'introduire longitudinalement par l'ouverture des rainures en queue d'aronde $8_1$, 12, 13 puis pour se verrouiller dans ces rainures par un pivotement de 45°. La longueur de ce pêne est donc supérieure à la largeur de la rainure en queue d'aronde.

Les extrémités du pêne 32 sont réalisées d'une forme prismatique adaptée, comme cela est représenté sur les figures 8 et 9, ce pêne comportant en outre deux embrèvements $33_1$ et $33_2$ adaptés pour coopérer avec les billes 29 soit dans la position haute de la traverse supérieure, soit dans la position basse de cette traverse supérieure.

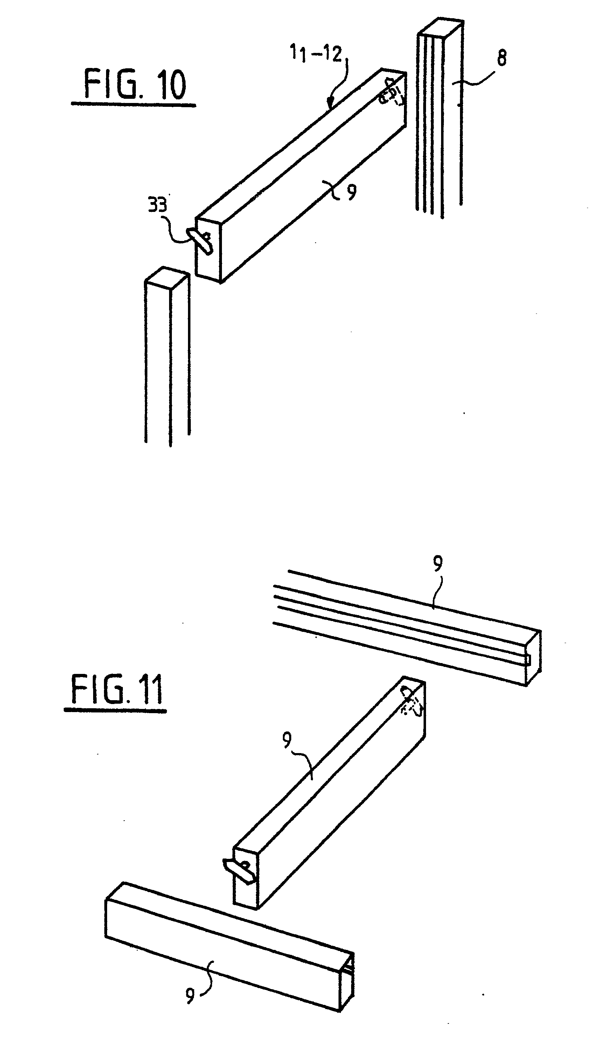

Ces pênes 33 disposés en oblique sur les traverses 9 pourront donc être mis en œuvre pour l'assemblage des traverses horizontales hautes ou basses $1_1$, $1_2$ à des montants 8 comme cela est représenté sur la figure 10 ou, au contraire, pour l'assemblage de traverses 9 en un point intermédiaire de la longueur d'autres traverses 9 par insertion des pênes obliques 33 dans les rainures 12 ou 13. Egalement, si désiré, ces pênes obliques 33 pourront être mis en œuvre pour relier l'extrémité supérieure d'un montant à un point intermédiaire d'une traverse.

Suivant l'exemple de réalisation des figures de 12 à 15, le pêne 7 est solidaire d'une tige 35 qui est montée à coulissement axial dans une embase 36 réalisée par deux éléments de forme identique $36_1$ et $36_2$.

La tige 35 présente une première zone de section cylindrique $35_1$ suivie par une seconde zone à section cylindrique $35_2$ de section rétrécie, elle-même prolongée par une zone de section carrée $35_3$ dont la longueur de la diagonale est supérieure au diamètre de la section cylindrique $35_2$ afin de former des surfaces d'appui d'extrémité en $35_4$.

L'embase 36 est pourvue d'un logement 37 qui est destiné à recevoir à coulissement la tige 35 du pêne 7.

A cet effet, le logement 37 comporte une première zone cylindrique à section circulaire $37_1$ dont le diamètre correspond à celui de la zone 35 puis une seconde zone cylindrique à section circulaire $37_2$ dont le diamètre correspond à celui de la zone $35_2$, cette seconde zone $37_2$ étant suivie d'une zone $37_3$ à section carrée dont la section correspond à celle de la zone à section carrée $35_3$.

Les deux zones $37_2$ et $37_3$ délimitent entre elles des surfaces d'appui $37_4$.

Entre le fond du logement 37 et la zone à section carrée $37_3$ il est prévu une quatrième zone cylindrique à section circulaire $37_5$ dont le diamètre est supérieur à la diagonale de la zone à section carrée $35_3$.

Par ailleurs, lorsque la tige 35 du pêne 7 est disposée dans le logement 37 délimité par les deux parties $36_1$ et $36_2$ de l'ensemble 36, on place un ressort (non représenté) entre le fond du logement 37 et la zone de section carrée $35_3$ afin que ce ressort tende constamment à appliquer l'une contre l'autre les surfaces d'appui $35_4$ et $37_4$ de façon que les zones de section carrée $35_3$ et $37_3$ coopèrent l'une l'autre pour bloquer en rotation le pêne 7. Par contre, si l'on pousse sur le pêne 7 ou au contraire si l'on tire sur la traverse $1_1$ recevant l'embase 36, dans ce cas on fait coulisser la tige 35 suivant sont axe X–X dans le logement 37 d'axe Y–Y de l'embase, afin de dégager axialement, à l'encontre du ressort, les deux zones de section carrée $35_3$ et $37_3$ pour permettre la rotation du pêne 7 par rapport à son embase et, donc, par rapport au profilé des traverses $1_1$ .Cette rotation s'effectue tant que le pêne 7 est déplacé axialement par rapport à son embase à l'encontre du ressort et tant que la zone de section carrée $35_3$ n'est pas retombée dans le logement de section correspondante $37_3$ après une rotation de 90°.

Le dispositif permettra donc de placer rapidement le pêne 7 soit comme il est représenté sur la figure 2, soit à 90° par rapport à cette position afin de permettre indifféremment l'assemblage d'une traverse dans l'une des rainures en queue d'aronde $8_1$ d'un montant ou dans l'une des rainures en queue d'aronde 12, 13 d'une autre traverse.

Suivant les figures 16, 17 et 18, on a représenté un autre mode de réalisation dans lequel le pêne 38 est pourvu d'une tige cylindrique étagée 39 montée à coulissement axial dans le logement 40 d'une embase 41.

La tige 39 est pourvue, à son extrémité arrière, d'une portion d'axe transversal 42 susceptible de venir se loger dans des encoches 43 décalées de 90°.

La tige 39 est montée à coulissement axial à l'encontre d'un ressort 44 afin qu'il soit possible de décaler de 90° le pêne 38 en exerçant une pression axiale sur le pêne pour dégager la portion d'axe 42 d'une encoche 43 et pour l'amener dans une autre encoche décalée de 90°.

## Revendications

1. Dispositif d'assemblage d'ossature de stand pour exposition temporaire, comportant des montants verticaux (2) reliés par des traverses horizontales hautes et basses ($1_1$, $1_2$) pourvues d'une rainure longitudinale recevant et maintenant des panneaux (5) formant les cloisons de stand, les montants verticaux présentant des rainures longitudinales en queue d'aronde ($8_1$) entourant un canal central ($8_2$), ces rainures étant adaptées à recevoir des pênes (7) prévus aux extrémités des traverses pour leur assemblage avec les montants, dispositif caractérisé en ce que les montants (8) comportant à leurs extrémités supérieures des fentes longitudinales ($8_3$) situées dans le fond des rainures en queue d'aronde ($8_1$), ces fentes ($8_3$) débouchant à l'extrémité supérieure des montants qui est adjacente de l'extrémité de la traverse haute à assembler et en ce qu'un noyau (19) est disposé dans ces fentes, ce noyau présentant au moins un talon (22) se disposant transversalement dans une rainure en queue d'aronde ($8_1$), au moins une bille (29) maintenue dans un orifice du noyau de façon à faire saillie dans la rainure en queue d'aronde au-dessus de ce talon et un doigt (25) coulissant dans le noyau à l'encontre d'un ressort (28), ce doigt étant pourvu d'une encoche (26) et étant susceptible de prendre deux positions pour l'une desquelles l'encoche (26) du doigt (25) est située à hauteur de la bille (29) et permet son dégagement de la rainure pour le passage du pêne (7), tandis que pour l'autre position, le doigt (25) verrouille la bille (29) en saillie dans la rainure ($8_1$) et maintient le pêne soit dans une position haute, au-dessus de la bille, soit dans une position basse entre le talon et la bille.

2. Dispositif conforme à la revendication 1, caractérisé en ce que les traverses hautes et basses ($1_1$, $1_2$) sont identiques et comportent deux rainures longitudinales opposées (10 et 11) de profondeur différente.

3. Dispositif conforme à la revendication 2, caractérisé en ce que les traverses ($1_1$, $1_2$) comportent à leurs extrémités, d'une part un pêne (7, 33), d'autre part un verrou élastique ($7_3$), ce pêne et ce verrou étant disposés dans le plan des deux rainures de profondeur différente (10 et 11).

4. Dispositif conforme à la revendication 3, caractérisé en ce que les traverses ($1_1$, $1_2$) présentent deux rainures longitudinales, opposées (12, 13), en queue d'aronde, orientées perpendiculairement aux rainures opposées de profondeur différente (10, 11), une rainure longitudinale de faible profondeur (18) étant prévue en position adjacente de chacune de ces rainures en queue d'aronde (12, 13) de manière à coopérer avec le verrou élastique (17) d'une autre traverse dont le pêne est logé dans la rainure en queue d'aronde voisine.

5. Dispositif conforme à la revendication 3, caractérisé en ce que les traverses ($1_1$, $1_2$) comportent deux canaux longitudinaux intérieurs (14, 15) recevant à leurs extrémités l'un les pênes (7), l'autre les verrous élastiques (17), les pênes présentant une embase de section carrée ($7_1$) par laquelle ils se logent de manière amovible dans le canal de section correspondante des traverses, chaque embase ($7_1$) étant pourvue d'un verrou à ressort ($7_3$) se logeant de manière amovible dans l'un de plusieurs orifices (31) prévus dans la paroi de ce canal à section carrée.

6. Dispositifs conforme à la revendication 3, caractérisé en ce que les pênes (33) prévus aux extrémités des traverses, sont inclinés à 45° par rapport à leur embase pour être situés en oblique par rapport au plan des rainures opposées (10, 11) de profondeur différente des traverses.

7. Dispositif conforme à la revendication 1, caractérisé en ce que le pêne (7) prévu aux extrémités des traverses est pourvu d'une tige (35) montée à coulissement axial, à l'encontre d'un ressort, dans un logement (37) d'une embase (36), la tige (35) et le logement (37) présentant chacun une zone de section carrée correspondante ($35_3$, $37_3$) disposées de manière telle que cette tige et ce logement puissent occuper deux positions axiales relatives pour l'une desquelles les zones de section carrée sont dégagées axialement l'une de l'autre à l'encontre du ressort, pour permettre la rotation du pêne et pour l'autre desquelles les zones de section carrée sont disposées et maintenues l'une dans l'autre, sous l'action du ressort, pour bloquer le pêne en rotation.

8. Dispositif conforme à la revendication 7, caractérisé en ce que l'embase (36) est réalisée en

deux parties ($36_1$, $36_2$) s'assemblant l'une l'autre suivant un plan de joint axial.

9. Dispositif conforme à la revendication 7, caractérisé en ce que les zones de section carrée ($35_3$, $37_3$) de la tige et de l'embase sont précédées, à l'opposé du ressort, de zones de section rétrécie ($35_2$, $37_2$) délimitant, en position de blocage en rotation du pêne, des surfaces d'appui ($35_4$, $37_4$) de ces zones de section carrée.

10. Dispositif comportant des montants verticaux (2) reliées par des traverses horizontales pourvues d'une rainure longitudinale recevant et maintenant des panneaux (5) formant les cloisons de stand, les montants verticaux présentant des rainures longitunales en queue d'aronde ($8_1$) entourant un canal central ($8_2$), ces rainures étant adaptées à recevoir des pênes (38) prévus aux extrémités des traverses pour leur assemblage avec les montants, dispositif caractérisé en ce que le pêne (38) orévu aux extrémités des traverses est pourvu d'une tige (39) montée à coulissement axial, à l'encontre d'un ressort, dans un logement (40) d'une embase (41), la tige (39) étant pourvue d'une portion d'axe transversal susceptible de se loger dans des encoches (43) décalées de 90° prévues à l'extrémité de l'embase, de manière telle que cette tige et l'embase puissent occuper deux positions axiales relatives pour l'une desquelles les zones de section carrée sont dégagées axialement l'une de l'autre à l'encontre du ressort, pour permettre la rotation du pêne et pour l'autre desquelles la portion d'axe transversal est disposée et maintenue dans au moins une encoche sous l'action du ressort, pour bloquer le pêne en rotation.

## Claims

1. Device for assembling the framework of a temporary exhibition stand, comprising vertical uprights (2) connected by top and bottom horizontal cross members ($1_1$, $1_2$) provided with a longitudinal groove receiving and maintaining panels (5) forming stand partitions, the vertical uprights comprising dovetailed longitudinal grooves ($8_1$) enclosing a central passage ($8_2$), said grooves being adapted to receive bolts (7) provided at the ends of cross members in order to assemble them together with the uprights, the said device being characterised in that the uprights (8) comprise at their top ends longitudinal slots ($8_3$) situated in the bottom of the dovetailed grooves ($8_1$), the slots ($8_3$) terminating at the top end of the uprights adjacent to the end of the top cross member which is to be assembled and in that a hub (19) is disposed in these slots, the said hub having at least one heel (22) disposed transversely in a dovetailed groove ($8_1$), at least one ball (29) maintained in an orifice in the hub in such a way as to project into the dovetailed groove above this heel and a rod (25) sliding in the hub against the action of a spring (28), the said rod being provided with a notch (26) and being adapted to assume two positions, in one of which the notch (26) on the rod (25) is situated at the height of the ball (29) and permits it to be moved out of the groove to allow passage of the bolt (7), while in the other position the rod (25) locks the ball (29) so that it projects into the groove ($8_1$) and maintains the bolt either in a raised position above the ball or in a low position between the heel and the ball.

2. A device according to Claim 1, characterised in that the top and bottom cross members ($1_1$, $1_2$) are identical and comprise two oppositely directed longitudinal grooves (10 and 11) of different depths.

3. A device according to Claim 2, characterised in that the cross members ($1_1$, $1_2$) comprise at their ends on the one hand a bolt (7, 33) and on the other a spring loaded catch ($7_3$), the said bolt and the said spring loaded catch being disposed in the plane of the two grooves of different depths (10 and 11).

4. A device according to Claim 3, characterised in that the cross members ($1_1$, $1_2$) comprise two longitudinal and oppositely directed grooves (12, 13) of dovetailed cross-section orientated at a right-angle to the oppositely directed grooves of different depths (10, 11), a shallow longitudinal groove (18) being provided in a position adjacent to each of the said dovetailed grooves (12, 13) in such a way as to cooperate with the spring loaded catch (17) of another cross member, the bolt of which is housed in the adjacent dovetailed groove.

5. A device according to Claim 3, characterised in that the cross members ($1_1$, $1_2$) comprise two inner longitudinal passages (14, 15) receiving at their ends in one case the bolts (7) and in the other the spring loaded catches (17), the bolts having a base ($7^1$) of square cross-section, by which they are housed in removable fashion in the passage of corresponding cross-section in the cross members, each base ($7_1$) being provided with a spring loaded bolt ($7_3$) accommodated in removable manner in one of a plurality of orifices (31) provided in the wall of this passage which is of square cross-section.

6. A device according to Claim 3, characterised in that the bolts (33) provided on the ends of the cross members are inclined at 45° in relation to the plane of the oppositely directed grooves (10, 11) of different depths which are provided in the cross members.

7. A device according to Claim 1, characterised in that the bolt (7) provided at the ends of the cross members is provided with a rod (35) mounted to slide axially and against the action of a spring in a housing (37) in a socket (36), the rod (35) and the housing (37) each having a zone of correspondingly square cross-section ($35_3$, $37_3$) disposed in such a way that the said rod and the said housing can occupy two relative axial positions in one of which the zones of square cross-section are axially clear of each other against the action of the spring in order to allow rotation of the bolt, while in the other the zones of square cross-section are disposed and maintained one in the other under the action of the spring in order to block the bolt against rotary movement.

8. A device according to Claim 7, characterised in that the socket (36) is made in two parts ($36_1$, $36_2$) one and the other being assembled according to an axial plane of connection.

9. A device according to Claim 7, characterised in that the zones of square cross-section ($35_3$, $37_3$)

of the rod and of the socket are, in the opposite direction from the spring, proceded by zones of narrowed cross-section ($35_2$, $37_2$) which, in the position in which the bolt is blocked against rotary movement, define bearing surfaces ($35_4$, $37_4$) of these zones which are of square cross-section.

10. A device comprising vertical uprights (2) connected by horizontal cross members provided with a longitudinal groove receiving and maintaining panels (5) forming stand partitions, the vertical uprights comprising dovetailed longitudinal grooves ($8_1$) enclosing a central passage ($8_2$), these grooves being adapted to receive bolts (38) provided at the ends of cross members in order to assemble them together with the uprights, the said device being characterised in that the bolt (38) provided at the ends of the cross members is provided with a rod (39) mounted for an axial sliding movement against the action of a spring and in a housing (40) in a socket (41), the rod (39) being provided with a portion of transverse axis and adapted to be housed in notches (43) offset by 90° in relation to one another and provided on the ends of the socket, in such a way that the said rod and the socket can occupy two relative axial positions in one of which the zones of square cross-section are axially clear of each other, being moved against the action of the spring to allow rotation of the bolt while in the other position the portion of transverse axis is disposed and maintained in at least one notch under the action of the spring in order to secure the bolt against rotary movement.

**Patentansprüche**

1. Verbindungsvorrichtung für ein Rahmengerüst von Ständen für vorübergehende Ausstellungen umfassend vertikale Ständer (2), die oben und unten durch horizontale Querträger verbunden sind ($1_1$, $1_2$), die zur Aufnahme und zum Festhalten von Trennwände des Standes bildenden Platten (5) mit einem länglichen Einschnitt versehen sind, wobei die vertikalen Ständer längliche schwalbenschwanzförmige Nuten ($8_1$) aufweisen, die einen zentralen Kanal ($8_2$) umgeben und die für die Aufnahme von Riegeln (7) geeignet sind, die zu deren Verbindung mit den Ständern an den Rändern der Querträger vorgesehen sind, dadurch gekennzeichnet, daß die Ständer (8) an ihren oberen Rändern längliche Einschnitte ($8_3$) enthalten, die sich im Boden der schwalbenschwanzförmigen Nuten ($8_1$) befinden, daß die Einschnitte ($8_3$) in dem oberen Rand der Ständer münden, der dem Rand der zu verbindenden oberen Querträger benachbart ist, wobei ein Kern (19) in diesen Einschnitten angeordnet ist, der zumindest einen Ansatz (22) aufweist, der transversal in einer Schwalbenschwanznute ($8_1$) angeordnet ist, daß zumindest eine kleine Kugel (29) in einer Öffnung des Kerns derart festlegbar ist, daß sie in die Schwalbenschwanznute über den Ansatz hervorspringt, und daß ein Zapfen (25) innerhalb des Kerns gegen eine Feder (28) läuft, der mit einer Einkerbung (26) versehen ist und zwei Stellungen einnehmen kann, wobei für die eine dieser Stellungen die Einkerbung (26) des Zapfens (25) auf der Höhe der Kugel (29) liegt und das Freisetzen derselben aus der Nute für den Durchgang des Riegels (7) ermöglicht, während in der anderen Stellung der Zapfen (25) die in die Nute ($8_1$) vorragende Kugel (29) verriegelt, und den Riegel entweder in einer oberen Stellung über der Kugel oder in einer unteren Stellung zwischen dem Ansatz und der Kugel hält.

2. Vorrichtung gemäß Anspruch 1, dadurch gekennzeichnet, daß die oberen und unteren Querträger ($1_1$, $1_2$) gleich sind und zwei entgegengesetzte längliche Nuten (10 und 11) von verschiedener Tiefe aufweisen.

3. Vorrichtung gemäß Anspruch 2, dadurch gekennzeichnet, daß die Querträger ($1^1$, $1_2$) an ihren Rändern einerseits einen Riegel (7, 33) und andererseits einen elastischen Bolzen ($7_3$) aufweisen, wobei der Riegel und der Bolzen in der Ebene der beiden Nuten von verschiedener Tiefe (10 und 11) angeordnet sind.

4. Vorrichtung gemäß Anspruch 3, dadurch gekennzeichnet, daß die Querträger ($1_1$, $1_2$) zwei entgegengesetzte längliche schwalbenschwanzförmige Nuten (12, 13) aufweisen, die senkrecht zu den entgegengesetzten Nuten (10, 11) von verschiedener Tiefe verlaufen und daß eine längliche Nute von geringer Tiefe (18), die benachbart zu jeder der schwalbenschwanzförmigen Nuten (12, 13) derart vorgesehen ist, daß ein Zusammenwirken mit einem elastischen Bolzen (17) eines anderen Querträgers erfolgt, dessen Riegel sich in der benachbarten schwalbenschwanzförmigen Nute befindet.

5. Vorrichtung gemäß Anspruch 4, dadurch gekennzeichnet, daß die Querträger ($1_1$, $1_2$) zwei längliche innere Kanäle (14, 15) aufweisen, wovon der eine an den Rändern die Riegel (7) und der andere die elastischen Bolzen (17) aufnimmt, daß die Riegel einen Ansatz ($7_1$) von viereckigem bzw. quadratischem Querschnitt aufweisen, wodurch sie entfernbar in dem Kanal des ensprechenden Abschnittes der Querträger gelagert sind, und daß jeder Ansatz ($7_1$) mit einem Schnappriegel ($7_3$) versehen ist, der entfernbar in einer der zahlreichen Öffnungen (31) gelagert ist, die in der Wand des Kanals von viereckigem bzw. quadratischem Querschnitt vorgesehen sind.

6. Vorrichtung gemäß Anspruch 3, dadurch gekennzeichnet, daß die an den Rändern der Querträger vorgesehenen Riegel (33) um 45° in bezug auf ihren Ansatz derart geneigt sind, daß sie schräg in bezug auf die Ebene der entgegengesetzten Nuten (10, 11) verschiedener Tiefe der Querträger liegen.

7. Vorrichtung gemäss Anspruch 1, dadurch gekennzeichnet, daß der an den Rändern der Querträger vorgesehene Riegel (7) mit einem Schaft (35) versehen ist, der in Axialrichtung gegen eine Feder in einer Lagerung (37) eines Ansatzes (36) angeordnet ist, daß der Schaft (35) und die Lagerung (37) je eine entsprechende Zone von viereckigem bzw. quadratischem Querschnitt ($35_3$, $37_3$) aufweist, die derart angeordnet sind, daß der Schaft und die Lagerung zwei relativ axiale Stellungen einnehmen können, wobei für die eine derselben die viereckigen bzw. quadratischen Querschnittszonen axial voneinander gegen eine Feder getrennt sind, um die Drehung des Riegels zu ermöglichen, und wobei für die andere derselben die Zonen von viereckigem bzw. quadratischem Querschnitt unter Einwirkung der Feder ineinander angeordnet und gehalten sind, um den Riegel in der Drehung zu blockieren.

8. Vorrichtung gemäß Anspruch 7, dadurch gekennzeichnet, daß der Ansatz (36) aus zwei Teilen ($36_1$, $36_2$) besteht, die entlang einer axialen Verbindungsfläche zusammengesetzt sind.

9. Vorrichtung gemäß Anspruch 7, dadurch gekennzeichnet, daß die Zonen von viereckigem bzw. quadratischem Querschnitt ($35_3$, $37_3$) des Schaftes und des Ansatzes, gegenüber der Feder, sich vor den Zonen mit verengtem Querschnitt ($35_2$, $37_2$) befinden, die in Blockierstellung bei Drehung des Riegels die Stützflächen ($35_4$, $37_4$) dieser Zonen von viereckigem bzw. quadratischem Querschnitt begrenzen.

10. Vorrichtung umfassend durch horizontale Querträger verbundene vertikale Ständer (2), die mit einer Längsnute für die Aufnahme und das Festhalten von Trennwände eines Standes bildenden Platten (5) versehen sind, wobei die vertikalen Ständer schwalbenschwanzförmige Längsnuten ($8_1$) aufweisen, die einen zentralen Kanal ($8_2$) umgeben und die für die Aufnahme von Riegeln (38) geeignet sind, die zu deren Verbindung mit den Ständern an den Rändern der Querträger vorgesehen sind, dadurch gekennzeichnet, daß der Riegel (38), der an den Rändern der Querträger vorgesehen ist, mit einem Schaft (39) versehen ist, der in Axialrichtung gegen eine Feder in einer Lagerung (40) eines Ansatzes (41) angeordnet ist, daß der Schaft (39) mit einem quergerichteten Abschnitt versehen ist, der in um 90° versetzte Einkerbungen (43) einbringbar ist, die am Rand des Ansatzes vorgesehen sind, wobei der Schaft und der Ansatz zwei relativ axiale Stellungen derart einnehmen können, daß in der einen derselben die Zonen von viereckigem bzw. quadratischem Querschnitt axial voneinander gegen eine Feder getrennt sind, um die Drehung des Riegels zu ermöglichen, und daß in der anderen derselben der quergerichtete Abschnitt in wenigstens einer Einkerbung unter Wirkung der Feder angeordnet und haltbar ist, um den Riegel in der Drehung zu blockieren.

FIG.1

FIG. 2

FIG.3

FIG.5

FIG.4

## FIG. 6

## FIG.7

19

25

21

30

8

25

29

17

12

22

17₁

1

## FIG.8

33

332

32

331

## FIG.9

1

33

FIG. 10

11-12

8

33

9

FIG. 11

9

9

9

## FIG.12

## FIG.13

## FIG.14

## FIG.15

## FIG. 16

## FIG. 18

## FIG. 17